# EUROPÄISCHE PATENTANMELDUNG

(11) **EP 0 919 827 A2**
(43) Veröffentlichungstag der Anmeldung: **02.06.1999**
(21) Anmeldenummer: 98440233.9
(22) Anmeldetag: 23.10.1998
(51) Int. Cl.: G01S 5/14

(54) **Verfahren zur automatischen Bestimmung der Position von Fahrzeugen**

(30) Priorität: 26.11.1997 DE 19752361
(71) Anmelder: ALCATEL, 75008 Paris (FR)
(72) Erfinder: Oster, Martin, 2202 Königsbrunn (AT); Schiehser, Günter, 1190 Wien (AT); Weisbier, Peter, 1030 Wien (AT); Grande, Wolfgang, 3413 Hintersdorf (AT)
(74) Vertreter: Rausch, Gabriele, Dr.

(57) **Zusammenfassung**

Es wird ein Verfahren zur automatischen Bestimmung der Position von Fahrzeugen mit einem DGPS (Differential Global Positioning System) Verfahren vorgeschlagen, bei dem mindestens ein Fahrzeug des öffentlichen Personennahverkehrs und eine Feststation die Entfernung zur GPS Satelliten charakterisierende GPS Daten empfangen, wobei die Daten der Feststation als Korrekturdaten 8 über Betriebsfunktelegramme 5 an die Mobilstationen 6 in den Fahrzeugen 1 übertragen werden und wobei die Übertragung der Korrekturdaten 8 durch Erweiterung der Betriebsfunktelegramme 5 mindestens ein Informationsbyte 9 erfolgt.

## Beschreibung

Die Erfindung geht aus von einem Verfahren zur automatischen Bestimmung der Position von Fahrzeugen mit einem DGPS (Differential Global Positioning System)-Verfahren nach der Gattung des Hauptanspruchs.

Aus dem Fachbeitrag "AVLS- Ein System zur automatischen Positionsbestimmung von Fahrzeugen", A. Bethmann et al., Alcatel SEL, Stuttgart, 1994 ist bekannt, eine Vielzahl von Positionsbestimmungsmöglichkeiten zu benutzen, um die genauen Lagen von Fahrzeugen zu errechnen. Dazu wird zum Beispiel das Global Positioning System GPS eingesetzt. Das System besteht aus 25 Satelliten, die jedoch nicht mehr alle aktiv sind. Die Ortungsgenauigkeit für private Nutzer liegt bei annähernd 100 Metern. Die Positionsbestimmung beruht auf der direkten Entfernungsmessung zwischen Satelliten und Fahrzeugempfänger im Einweglaufzeitmeßverfahren mit synchronisierter Zeitreferenz.. Da ionosphärische Störungen die Signallaufzeiten beeinflussen, atmosphärische Störungen und Dämpfungen die Signalverfügbarkeit einschränken, ist mit Ungenauigkeiten zu rechnen. Zudem kann vor allem in einem städtischen Umfeld Mehrwegeempfang Ortungsfehler verursachen. In Tunnels sind Signalabschattungen möglich.

Die Probleme mit dem Global Positioning System werden teilweise umgangen, durch den Einsatz eines differentiellen Verfahrens. Ein GPS Empfänger wird an einem bekannten Referenzstandort untergebracht. Dieser Referenzempfänger kann die Entfernung von seinem Standort zu den Satelliten sehr genau bestimmen. Diese Entfernungen werden nun in den Fahrzeugen mit den in den Fahrzeugen gemessenen Entfernungen verglichen. Dadurch werden die Fehler in der Entfernungsmessung bestimmt und das Ergebnis der Messung dadurch verbessert. Mit Hilfe dieses Verfahrens kann die Genauigkeit der Positionierung auf 10 Meter in horizontaler Richtung erhöht werden. Ebenfalls im oben genannten Fach beitrag wird die Art der Datenübertragung zwischen der Feststation und den Mobileinrichtungen diskutiert. Als beispielhafte Lösung wird der Einsatz von Betriebsfunk (PMR-Private Mobile Radio) zur Kommunikation der Mobilstationen mit der Feststation diskutiert. Gerade im öffentlichen Nahverkehr sind Betriebsfunknetze weit verbreitet, wobei deren Datenkapazität nicht beliebig auszuweiten ist.

Daher besteht die Aufgabe die Vorteile der differentiellen GPS Positionsbestimmung in bestehende Fuhrparks zu integrieren, indem existierende Betriebsfunknetze verwendet werden, um die relevanten Daten auszutauschen.

Das erfindungsgemäße Verfahren mit den kennzeichnenden Merkmalen des Hauptanspruchs hat den Vorteil, daß durch Einbindung der GPS-Daten der Feststation in ein Betriebsfunktelegramm die für die Berechnung einer genauen Position notwendigen Korrekturdaten an die Mobilstation übertragen wird. Das System erfordert keinen Austausch der bereits vorhandenen Infrastruktur und keine Veränderung der gegebenen Betriebsfunkprotokolle. Die relevanten Korrekturdaten werden in einzelnen Informationsbytes an die Mobilstation im Fahrzeug weitergegeben.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß das Verfahren ohne großen Aufwand in die Quasinorm der VDV (Verband Deutscher Verkehrsunternehmer) 420 eingebaut werden kann.

Zudem ist es auf einfache Weise möglich bis zu 15 zusätzliche Informationsbytes in den Daten rahmen der von dem VDV-Protokoll vorgegebenen Struktur einzufügen. Vorteilhafterweise wird ein Informationsbyte übertragen, indem signalisiert wird, ob Korrekturdaten eines Satelliten und wenn ja eines oder zweier Satelliten übertragen wird. Zusätzlich wird in den Informationsbytes die gesamte Information übertragen, die für die Korrektur der Position notwendig ist wie Abgleichsraten, Zeiten, Skallierungsfaktoren usw.

Ein Ausführungsbeispiel der Erfindung ist in der Zeichnung dargestellt und in der nachfolgenden Beschreibung näher erläutert.

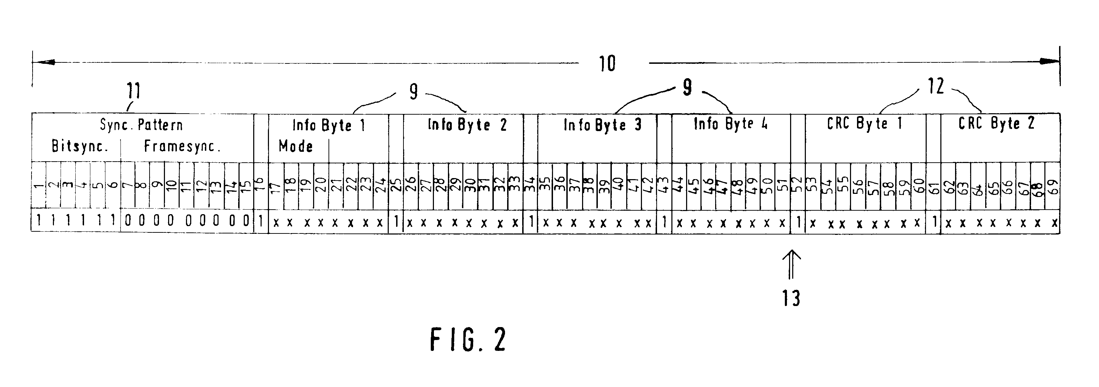

Es zeigt Figur 1 schematisch den Aufbau eines Kommunikationsnetzes, Figur 2 die Datenrahmenstruktur des Betriebsfunktelegramms und Figur 3 die Datenstruktur der Informationsbytes.

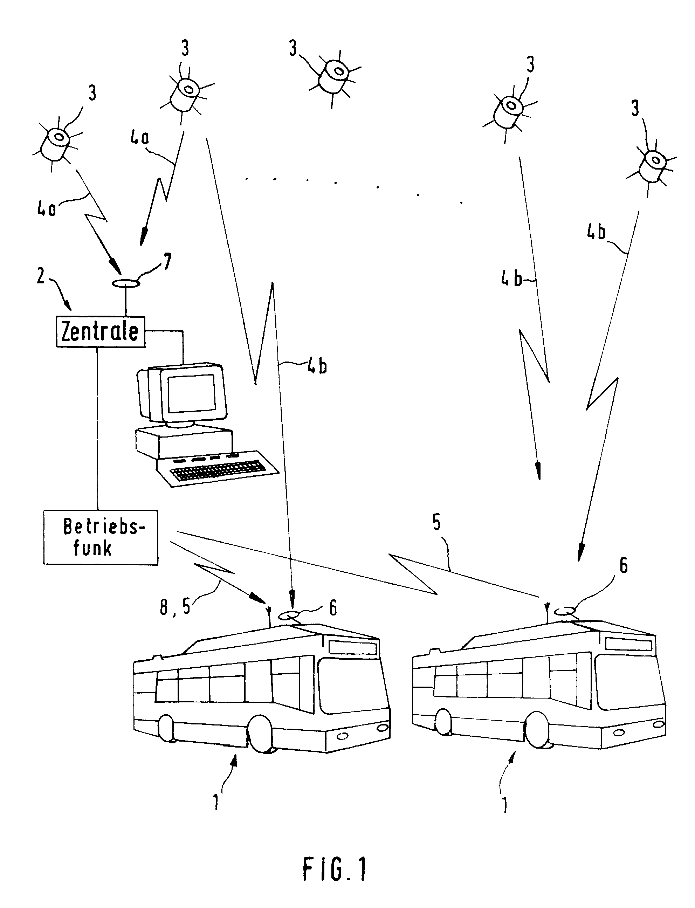

Figur 1 zeigt beispielhaft zwei Fahrzeuge 1 die über Mobilstationen 6 mit der Feststation 2 in Verbindung stehen. Die Verbindung wird über Betriebsfunktelegramme 5 zur Feststation 2 hergestellt. Die Fahrzeuge 1 besitzen zudem Mobilstationen 6, die zum Empfang der Positionierungssignale 4b der Satelliten 3 dienen. Die Zentrale 2 empfängt die Positionierungssignale 4a der Satelliten 3. Um die Vorteile des differentiellen GPS Verfahrens ausnützen zu können, wertet die Zentrale 2 die von ihr empfangenen GPS Signale 4a aus und sendet diese Signale über die Betriebsfunktelegramme 5 an die Fahrzeuge 1. Die Mobilstationen 6 der Fahrzeuge erhalten somit zwei komplette Datensätze zur Positionsbestimmung, nämlich die selbstgemessenen Daten 4b sowie die Korrekturdaten 8, die über den Betriebsfunkkanal von der Zentrale 2 übermittelt wurden. Die Korrekturdaten 8 sind im wesentlichen mit den von der Zentrale gemessenen Positionsdaten 4a identisch, müssen aber, da die Betriebsfunktelegramme nicht beliebig groß werden können, in mehreren Einheiten übertragen werden und stellen somit eine speziell aufbereitete Form des Datensatzes dar. Liegen beide Datensätze 4a und 4b komplett im Fahrzeug vor, kann die Mobilstation 6 eine Differenzberechnung vornehmen und so die Position des Fahrzeugs mit großer Genauigkeit bestimmen.

Zur Übertragung der GPS Daten 4a der Feststation dient das Betriebsfunktelegramm 5, das die Kommunikation zwischen Mobilstation und Feststation aufrechterhält. Das Betriebsfunktelegramm 5 besteht aus einem Datenrahmen 10, der verschiedene Sektionen enthält. Der Datenrahmen beginnt mit einem Synchronisationsmuster 11, das Informationen zur Synchronisation zwischen Feststation und Mobilstation enthält. Es folgt eine Sequenz von Informationsbytes 9, von denen die ersten 3 Bytes fest definiert sind und nicht mit zusätzlicher Information belegt werden können. Das vierte Informationsbyte sowie jedes weitere Informationsbyte das an der Stelle 12 in den Datenrahmen eingefügt werden kann, ist dagegen frei Informationen zu transportieren. Der Datenrahmen wird von zwei Kontrollbytes 12 abgeschlossen. Zwischen den einzelnen Informationsbytes 9 wird jeweils ein Stopfbit übertragen. Diese beiden Kontrollbytes CRC (Cyclic Redundancy Check) dienen dazu die Qualität den Datenkanals zu überprüfen und auf Fehlübertragungen aufmerksam zu machen. In den Informationsbytes 1 bis 4 werden Informationen über die Art des Betriebsfunkstelegramms sowie über die Länge des Telegramms übertragen. Dabei ist es möglich 15 zusätzliche Informationsbytes einzufügen, die den ursprünglich definierten 4 Informationsbytes folgen.

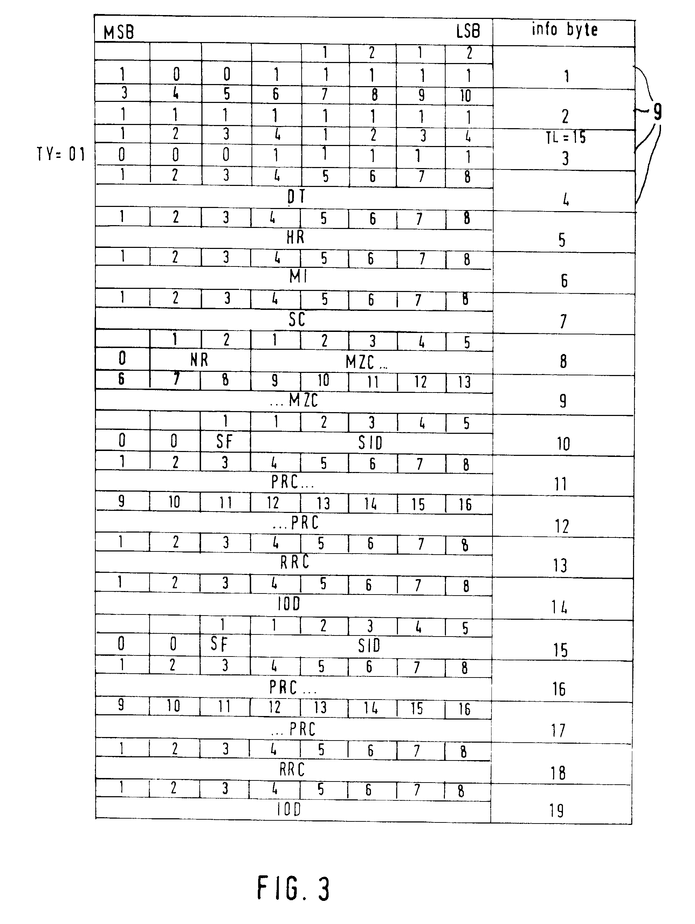

Figur 3 zeigt im Detail den Aufbau der Informationsbytes mit den laufenden Nummern 1 bis 19. Im dritten Informationsbyte wird die Information TY über den Typ des Telegramms sowie TL die Länge des Telegramms übertragen. Im folgenden werden verschiedene Informationen in den Informationsbytes 9 eingefügt:
DT (Day Type) definiert das aktuelle Datum HR (Hour of actual Time), Ml (Minutes of actual Time) SC (Seconds of actual Time), wobei all diese Daten zur Abstimmung der aktuellen Zeiten zwischen Feststation und Mobilstation dienen. Im achten Informationsbyte folgt eine Information NR (Number of satellite), die mit einer Länge von 2 Bit signalisiert, ob Daten eines Satelliten oder zweiter Satelliten oder keines Satelliten übertragen werden. Die anschließend folgenden Daten MZC (Modified Z-Count) beinhalten Daten für beide der möglichen, in diesem Telegramm übertragbaren Satellitendaten. Die Daten enthalten die Referenz zur GPS Zeit mit einem Skallierungsfaktor von 0,6 Sekunden. Im zehnten Informationsbyte wird mit SF (Scale Factor) der Skalierungsfaktor sowohl für die Pseude Range Correction (PRC) als auch die Range Rate Correction (RRC) übertragen. Die Information SID (Satellite ID) dient zur Identifikation des Satelliten. Anschließend wird mit PRC und RRC der Dateninhalt des anvisierten Satelliten übertragen. Im vierzehnten Informationsbyte befindet sich das Feld IOD, das die Informationen zur ephemerischen Position der Satelliten enthält. In den fünfzehnten bis neunzehnten Informationsbytes werden analog zum ersten Satelliten die Daten des zweiten Satelliten übertragen. Nach Übertragung von maximal 6 Betriebsfunktelegrammen mit der in Figur 3 vorgestellten Struktur sind die Referenzdaten von 12 Satelliten komplett an die Mobilstation übertragen.

Die in Figur 3 vorgestellte Datenstruktur stellt eine mögliche Datenstruktur dar. Selbstverständlich ist es auch möglich die erforderlichen Informationen und Daten in einer anderen Reihenfolge und in einer anderen Strukturierung zu übertragen, wobei die Randbedingungen des VDV-Protokolls gewahrt bleiben müssen.

Der enorme Vorteil des vorgestellten Verfahrens besteht in seiner einfachen Integrierung in bereits bestehende Betriebsfunknetze, die dem VDV-Standard folgen. Die Zusatzinformation ist in einfacher Weise einzubinden, wobei eine weitere Verarbeitung in geeigneter Weise in der Mobilstation selbst in einem intelligenten GPS Empfänger erfolgt.

## Patentansprüche

1. Verfahren zur automatischen Bestimmung der Position von Fahrzeugen (1) mit einer DGPS (Differential Global Positioning System) -Verfahren, bei dem mindestens ein Fahrzeug (1) des ÖPNV (öffentlicher Personen-Nah-Verkehr) und eine Feststation (2) die Entfernung zu GPS-Satelliten (3) charakterisierende GPS (Global Positioning Systems) - Daten (4a, 4b) empfangen, wobei die die GPS-Daten (4a) der Feststation als Korrekturdaten (8) über Betriebsfunk-Telegramme (5) an die Mobilstationen (6) in den Fahrzeugen (1) übertragen werden,
dadurch gekennzeichnet,
daß die Übertragung der Korrekturdaten (8) durch Erweiterung der Betriebsfunk-Telegramme (5) um mindestens ein Informationsbyte (9) erfolgt.

2. Verfahren zur automatischen Bestimmung der Position von Fahrzeugen nach Anspruch 1,
dadurch gekennzeichnet,
daß die Betriebsfunk-Telegramme (5) nach den Normen der VDV (Verband Deutscher Verkehrsunternehmer)-Protokollen aufgebaut werden.

3. Verfahren zur automatischen Bestimmung der Position von Fahrzeugen nach Anspruch 1 oder 2,
dadurch gekennzeichnet,
daß bis zu 16 zusätzliche Informationsbytes (9) in den Datenrahmen (10) der Betriebsfunk-Telegramme (5) eingefügt werden.

4. Verfahren zur automatischen Bestimmung der Position von Fahrzeugen nach einem der vorhergehenden Ansprüche,
dadurch gekennzeichnet,
daß die zusätzlichen Informationsbytes (9) die an der Feststation (2) empfangenen GPS-Daten (4a) mindestens eines Satelliten (3) enthalten.

5. Verfahren zur automatischen Bestimmung der Position von Fahrzeugen (1) nach einem der vorhergehenden Ansprüche,
dadurch gekennzeichnet,
daß in einem der Informationsbytes (9) signalisiert wird, ob Korrekturdaten und -wenn ja - Daten von einem oder zwei Satelliten (3) übertragen werden.

6. Verfahren zur automatischen Bestimmung der Position von Fahrzeugen (1) nach einem der vorhergehenden Ansprüche,
dadurch gekennzeichnet,
daß in den Informationsbytes (9) Daten zum Abgleich, zur Zeitbestimmung, zur Skalierung, sowie die Positionsdaten übertragen werden.
